(19) Europäisches Patentamt / European Patent Office / Office européen des brevets

(11) **EP 2 444 626 A1**

(12) **EUROPEAN PATENT APPLICATION**
published in accordance with Art. 153(4) EPC

(43) Date of publication:
**25.04.2012 Bulletin 2012/17**

(51) Int Cl.:
*F02B 37/18* (2006.01)

(21) Application number: **11750444.9**

(86) International application number:
**PCT/JP2011/052105**

(22) Date of filing: **02.02.2011**

(87) International publication number:
**WO 2011/108331 (09.09.2011 Gazette 2011/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2010 JP 2010044356**

(71) Applicant: **Mitsubishi Heavy Industries, Ltd.
Tokyo 108-8215 (JP)**

(72) Inventor: **YASOSHIMA, Takeshi
Tokyo 108-8215 (JP)**

(74) Representative: **HOFFMANN EITLE
Patent- und Rechtsanwälte
Arabellastraße 4
81925 München (DE)**

(54) **WASTE GATE VALVE DEVICE**

(57) A waste gate valve device in which a waste gate valve 100 is fully closed when a valve body of the waste gate valve 100 moves from an exhaust outlet passage 18s side toward an exhaust bypass passage 5 side and touches a seat face 12a of a valve seat part 12, wherein the valve body of the waste gate valve is provided with a protrusion 2 of a prescribed height on a touching side where the valve body of the waste gate valve touches the seat face 12a, the protrusion being configured so as to reduce an exhaust gas passage area of the exhaust gas.

Fig. 1

EP 2 444 626 A1

**Description**

BACKGROUND OF THE INVENTION

Field of the Invention

The present invention relates to a waste gate valve device which opens and closes an exhaust bypass passage that bypasses an exhaust turbine driven by an exhaust gas from an engine and connects an exhaust passage toward the exhaust turbine to an exhaust gas outlet passage.

Background of the Invention

An exhaust turbocharger of a relatively small size is provided with a waste gate valve which opens and closes an exhaust bypass passage that bypasses an exhaust turbine driven by an exhaust gas and connects an exhaust passage toward the exhaust turbine to an exhaust gas outlet passage. When the flow rate of the exhaust gas from the engine is excessive, the waste gate valve is controlled so that: the waste valve is opened; and a part of the exhaust gas is let bypass the exhaust turbine and escape toward the exhaust gas outlet passage. And, the exhaust gas flow rate is maintained at an appropriate level. In performing the control as described above, the level of the operation point of the exhaust gas flow rate in a low load operation is raised so that the power output of the engine is increased.

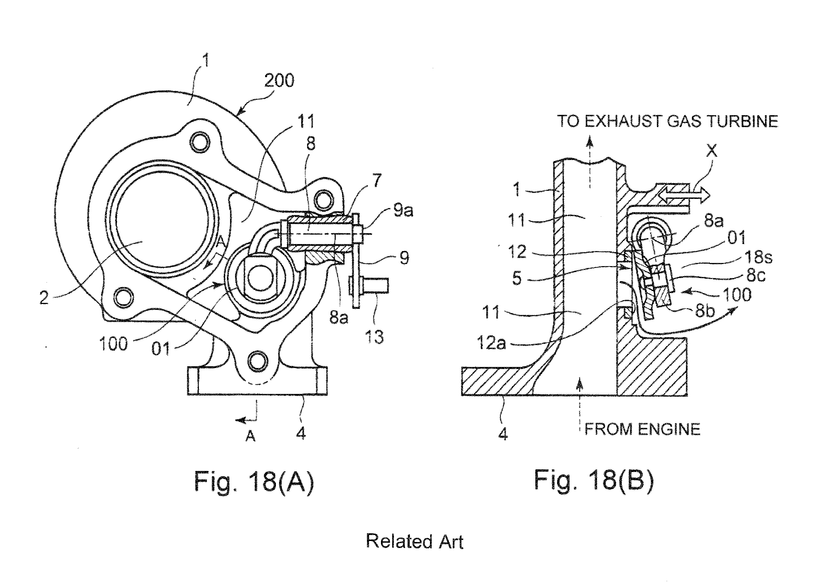

Figs. 18(a) and 18(b) show an example of a configuration around a waste gate valve of an exhaust turbine in a conventional exhaust turbocharger. Fig. 18(A) shows a longitudinal cross section of a driving part of a waste gate valve. And, Fig. 18(B) shows an A-A cross-section of 18(A).

In Figs. 18(a) and 18(b), the numeral 200 denotes an exhaust turbine, whose configuration is explained as below. Further, the numeral 1 denotes a turbine casing inside of which a turbine 2 (not shown) is provided.

The numeral 100 denotes a waste gate valve. A flow of exhaust gas supplied from an engine (not shown) toward the turbine 2 through an exhaust gas passage 11 is diverged from the exhaust gas passage 11 on an upstream side of the turbine 2; the exhaust gas diverged from the exhaust gas passage 11 streams through an exhaust bypass passage 5 toward an exhaust outlet passage 18s, so as to bypass the turbine 2. Thus, the exhaust gas passage 11 communicates with the exhaust outlet passage 18s. In addition, the numeral 4 denotes an exhaust gas inlet flange attached to an engine side.

A valve body 01 of the waste gate valve 100 opens and closes a valve seat part 12 of the exhaust bypass passage 5 by a to-and-fro movement of the valve body. As shown by the flow depicted with the arrow line in Fig. 18(B), the exhaust gas streams from the exhaust gas passage 11 to the exhaust outlet passage 18s through the exhaust bypass passage 5, when the waste gate valve is opened.

An end part 8b of a spindle 8 of an L-shape type is fastened to the valve body 01 of the waste gate valve 100 by means of a rivet 8c. The rotation part of the spindle 8 is rotation-freely supported by a bush 7 which is fastened to the turbine casing 1.

The numeral 9 denotes an arm, which is fixed to the shaft end part of the spindle 8 by means of a fixing member such as a caulking 9a. A connecting part 13 to be connected to an actuator (not shown) is provided at an end part of the arm 9. Hence, the spindle 8 is rotated around an axis 8a of the spindle 8 via a to-and-fro movement of the connecting part 13 which is moved by the actuator; and, by the rotational movement of the spindle 8 around the axis 8b. Thus, while the valve body 01 is attached to and detached from the valve seat part 12, the valve is opened and closed.

Further, in Fig. 19 according to Patent Reference 1 (JP2009-92026), the waste gate valve 5 is provided with the arm 53 whose root part is supported by the support shaft 51 that is rotation-freely supported by the cylinder head. The valve body 54s of a flat shape is supported at a free end part of the arm 53, so as to be rotation-freely supported around the axis 52 of the support shaft 51. Incidentally, the numerals and symbols used hereby are the same as the numerals and symbols in Patent Reference 1.

Further, by the rotational movement of the support shaft 51 around the axis 52, the bottom surface 54d of the valve body 54s of the flat shape is attached to and detached from the touching surface 56 of the valve seat part 55. Thus, the waste gate valve 5 is opened and closed. In addition, the numeral 103 denotes the exhaust gas bypass passage.

[References]

[Patent References]

Patent Reference 1: JP2009-92026

SUMMARY OF THE INVENTION

Subjects to be solved

In the waste gate valve provided with the valve body 01 or 54s of a flat shape such as shown in Figs. 18(A)/ 18(B) and Fig. 19 (which is based on Patent Reference 1), as shown by the line B in Fig. 20, it is expected to be ideal that the ratio X (%) of the flow rate of a gas passing through the waste gate valve W/G to the gas flow rate at the full opening of the waste gate valve W/G proportionally increases in response to the increase of the valve opening (the degree of the opening of the valve body).

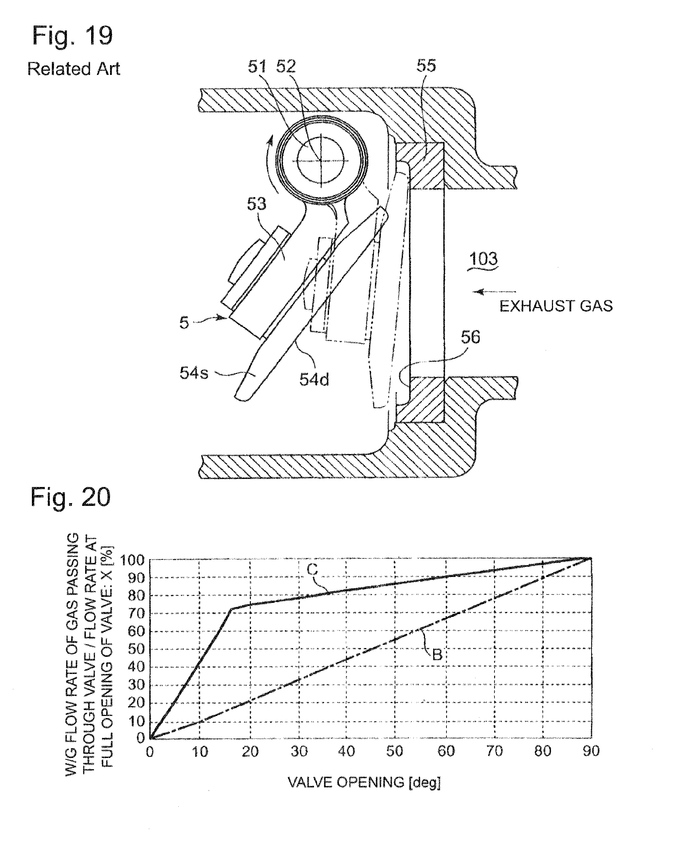

However, in the waste gate valve as shown in Fig. 18 and Fig. 19 (Patent Reference 1), at the free end part of the arm whose supporting part is rotationally-freely supported, the valve body of a flat shape is swing-freely supported around the axis of the supporting shaft. In short, the valve body is swing-freely supported around the support shaft. Accordingly, as shown by the line C in Fig. 20, the passing flow rate ratio X steeply increases when the valve opening is small (about the level of 0 to 20 degrees). Accordingly, as shown by the line C in Fig. 20, the passing flow rate ratio X steeply increases when the valve opening is in a small range (about the level of 0 to 20 degrees).

In other words, in the waste gate valve provided with such a valve body of a swing movement type, even under a condition that the valve opening is extremely small (about the level of 0 to 20 degrees), namely, the waste gate valve is nearly fully-closed, the exhaust gas may stream toward the exhaust passage side through the waste gate valve. And, in the flow rate characteristic of such a waste gate valve, it becomes difficult to control the responsiveness of the exhaust turbine; namely, the responsiveness of the exhaust turbine becomes unmanageable.

In view of the difficulty in the conventional technology, the present invention aims at providing a waste gate valve device including, but not limited to, a waste gate valve of a swinging movement type, wherein: the passing flow rate ratio proportionally increase along and near to a linear line with respect to the valve opening, especially in a range where the valve opening is extremely small; and the control of the responsiveness of the exhaust turbine can be smoothly performed over the whole opening range of the waste gate valve.

Means to solve the Subjects

In order to solve the difficulty as described above, the present invention discloses a waste gate valve device, including, but not limited to:

an exhaust bypass passage through which an exhaust passage connected to an exhaust turbine driven by an exhaust gas from an engine communicates with an exhaust outlet passage, by bypassing the exhaust gas turbine; and a waste gate valve including, but not limited to, a valve body which is fitted to a free end part of a support arm rotation-freely supported around a support shaft, and opens-and-closes a communication between the exhaust bypass passage and the exhaust outlet passage by a swing movement of the support arm, the waste gate valve being configured so as to be fully closed when the valve body touches a seat face of a valve seat part, wherein

the valve body of the waste gate valve is provided with a protrusion of a prescribed height on a touching side where the valve body of the waste gate valve touches the seat face, the protrusion being configured so as to reduce an exhaust gas passage area of the communication.

According to the invention as disclosed above, in the waste gate valve provided with the valve body of a swing movement type, the valve body of the waste gate valve is provided with a protrusion of a prescribed height on a touching side where the valve body of the waste gate valve touches the seat face, the protrusion being configured so as to reduce an exhaust gas passage area of the communication. Hence, for instance, in a case where the valve body of the waste gate valve is provided with a protrusion of a prescribed height (especially when the valve opening is extremely small in a range around 0 to 20 degrees), on the exhaust bypass passage side, namely, the upstream side of the valve body of the waste gate valve, the increase of the exhaust gas flow rate can be constrained and the steep increase of the passing flow rate of the exhaust gas can be controlled.

Consequently, even in the waste gate valve provided with the valve body of a swing movement type, over the whole valve opening range from the extremely small range (around 0 to 20 degrees) to the large range, the ratio of the flow rate of the exhaust gas passing through the valve body of the waste gate valve to the full flow rate can be almost proportionally increased in response to the increase of the valve opening. And, the control of the responsiveness of the exhaust turbine can be smoothly performed over the whole valve opening range.

On the other hand, in a case of the conventional waste gate valve provided with the valve body of a swing movement type as shown in Fig. 18 and Fig. 19 (Patent Reference 1), when the valve opening is extremely small and close to a full closed condition, the gas may stream through the waste gate valve toward the exhaust passage; based on such a flow rate characteristic, it is difficult to control the responsiveness of the exhaust turbine. In other words, the responsiveness of the exhaust turbine is unmanageable. However, according to the above-deseribed invention, the occurrence of this problem can be prevented.

A preferable embodiment of the above-described invention is the waste gate valve device, the protrusion including, but not limited to:

a first circular cone whose outer generating line intersects with a seat surface of the valve body at an intersecting angle of θ1, the first circular cone being connected to the valve body; and

a second circular cone whose outer generating line intersects with the seat surface of the valve body at an intersecting angle of θ2 that is smaller than the intersecting angle of θ1, the second circular cone being connected to an end part of the first circular cone,

wherein

the protrusion is formed with the first circular cone and the second circular cone so as to configure a two-stage circular cone.

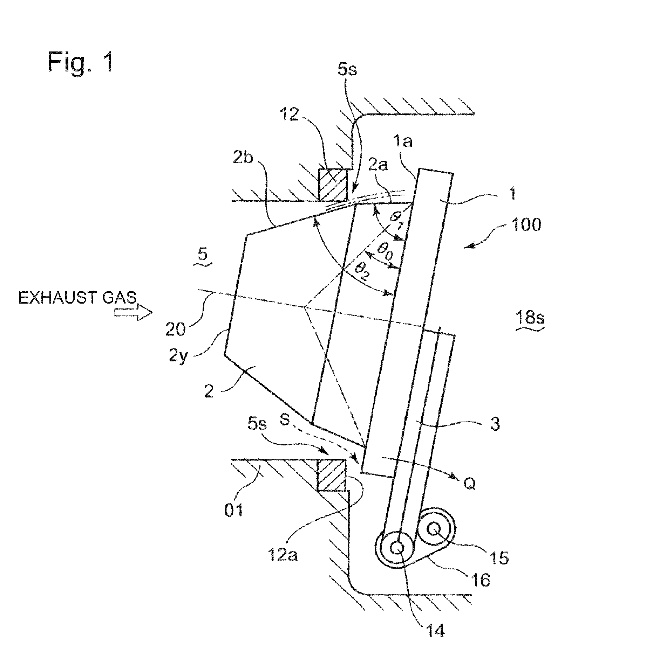

In the configuration as described above, in order to perform a fine adjustment of the flow rate, it becomes necessary to make greater the intersecting angle of θ1 and θ2 which are intersecting angles between the outer generating line of the circular cones and the seat surface of the valve body. And, an edge point of the protrusion forms a locus line as shown by the locus lines in Fig. 1; thus, the height of the protrusion is limited to a certain level so as to prevent the protrusion from interfering with the exhaust gas passage hole.

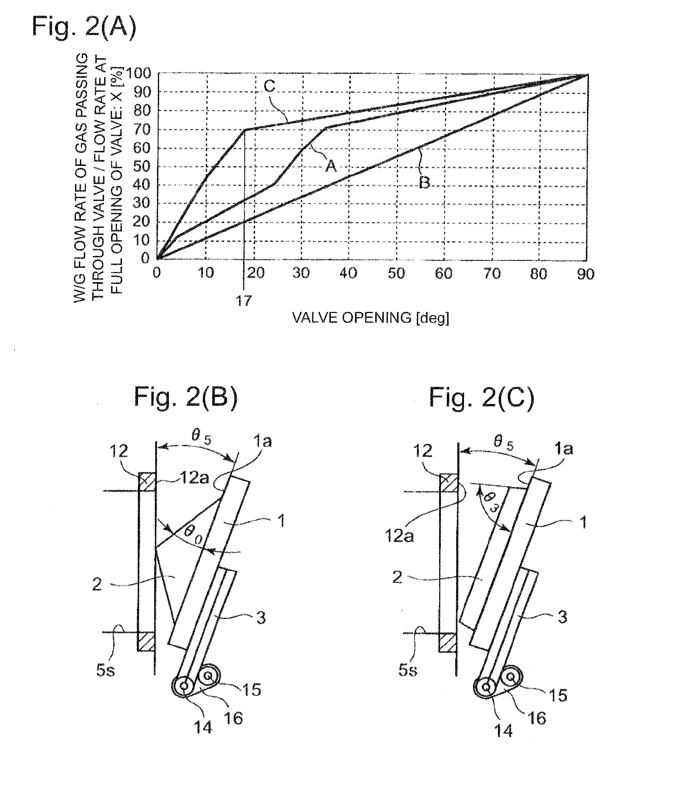

When the intersecting angle between the outer generating line of the circular cone and the seat surface of the valve body is made greater, a finer adjustment of the valve body can be performed. Thereby, since the edge point of the protrusion forms a locus line as shown by the locus lines in Fig. 1, the height of the protrusion has to be limited to a lower level. Hence, when angle between the outer generating line of the circular cone and the seat surface of the valve body exceeds 80 degrees and the valve opening angle θ5 (Fig. 2(C)) reaches 17 degrees, the aim of the protrusion is spoiled (Fig. 2(C)).

On the other hand, when the intersecting angle between the outer generating line of the circular cone and the seat surface of the valve body is smaller than 30 degrees, the effect of the protrusion on the fine adjustment of the flow rate can be expected only while the valve opening angle stays smaller than 17 degrees (Fig. 2(B)).

Hence, the intersecting angle θ1 between the outer generating line of the circular cone and the seat surface of the valve body is assumed to be not greater than 80 degrees and not smaller than 30 degrees.

In the above-described example, however, the protrusion is configured by integrating the first circular cone and the second circular cone into a two-stage circular cone. Hence, the intersecting angle θ can be taken as an angle in a range 30 < θ < 90 degrees.

When the angle is taken from the angle range as described, the relationship between the valve opening and the ratio X (%) of the flow rate of a gas passing through the waste gate valve W/G to the gas flow rate at the full opening of the waste gate valve W/G is expressed by the line A as shown in Fig. 2(A). Thus, the relationship between the ratio X and the valve opening gets closer to an ideal relationship line B along which the ratio X (%) proportionally increases with respect to the valve opening.

Accordingly, by integrating the first circular cone and the second circular cone into a two-stage circular cone, the protrusion is configured. In this way, the effect of the protrusion on the fine adjustment can be achieved in a wide range of the valve opening 30 < θ < 90 degrees.

Another preferable embodiment of the above-disclosed invention is the waste gate valve device, wherein:

a distance from a swing movement center of the support arm to a tip end of the protrusion is taken as L1;
a distance from a swing movement center of the support arm to a farthest point of the protrusion is taken as L2; and
a distance from a swing movement center of the support arm to an opening end of an exhaust gas passage hole is taken as L3,

wherein

$$L3 > L1, \text{ and } L3 > L2.$$

According to the above-described configuration, the protrusion can be prevented from coming in contact with the opening edge of the exhaust gas passage hole.

In other preferable embodiments of the above-disclosed invention, the protrusion is configured so as to move parallel with the exhaust gas passage hole as described in the following five cases (1) to (5), in response to the valve opening angle even when the valve opening angle changes. When the protrusion is formed in these ways, an arbitrary area of the exhaust gas passage can be easily obtained even in a case where the valve body moves along an arc locus.

(1) The waste gate valve device, wherein
the protrusion is configured with a plurality of circular column bodies, the thickness of each circular column body linearly varies in the radial direction of the circular column body;
the circular column bodies are superposed and arranged so as not to interfere with an exhaust gas passage hole forming the exhaust bypass passage.
(2) The waste gate valve device, wherein
the protrusion is formed in a hemisphere-shape, whose root part is fixed to the valve body.
(3) The waste gate valve device, wherein
the protrusion is formed in a shape of a circular-cone-shape which has a pointed tip part, and the root large-diameter part of the protrusion is fixed to the valve body.
(4) The waste gate valve device, wherein
the protrusion is formed in a shape of a truncated cone-shape whose tip end part forms a flat surface, and the root large-diameter part of the protrusion is fixed to the valve body.
(5) The waste gate valve device, wherein
the protrusion is formed in a hemisphere-shape whose protrusion surface is distorted, and the root part of the protrusion is fixed to the valve body.

Further, another preferable embodiment of the above-disclosed invention is the waste gate valve device, wherein a hollow space is formed inside of the protrusion.
Accordingly, since the hollow space is provided inside of the protrusion, the weight of the valve body with the protrusion is reduced. Hence, the responsiveness can be enhanced; and, due to the hollow space provided inside of the protrusion and the reduced weight, the damage can be difficult to be caused. Moreover, the power to drive the valve body with the protrusion can be reduced.
Further, another preferable embodiment of the above-disclosed invention is the waste gate valve device, wherein the valve body and the protrusion are made of sheet metal and integrated into one-piece.
Accordingly, in comparison with the case where the protrusion is manufactured separately from the valve body and fitted to the valve body, the weight of the valve body into which the protrusion is integrated is reduced. Thus, the responsiveness can be enhanced. And, due to the integration of the valve body and the protrusion, the damage can be difficult to be caused. Moreover, the power to drive the valve body with the protrusion can be reduced and the manufacturing cost can be cheaper.
Further, another preferable embodiment of the above-disclosed invention is the waste gate valve device, wherein a clearance is established between an exhaust gas passage hole and a joint part of the protrusion and the valve body, the clearance being configured so that the protrusion and the valve body does not come in contact with the exhaust gas passage hole even in a case where a thermal expansion of the valve body is generated.
To be more specific, in the above-described embodiment, the clearance is established between the exhaust gas passage hole and the joint part of the protrusion and the valve body, so that the joint part of the protrusion and the valve body does not come in contact with the exhaust gas passage hole. In other words, the clearance is established between the exhaust gas passage hole and the joint part of the protrusion and the valve body, so that the clearance is greatly established in order to include and compensate the thermal expansion. In this way, the interference between the inner diameter of the exhaust gas passage hole and the outer diameter of the joint part of the protrusion and the valve body is avoided, the interference being attributable to the thermal expansion.
Further, another preferable embodiment of the above-disclosed invention is the waste gate valve device, wherein the protrusion is fitted to the valve body with an eccentricity so that the eccentricity is given in response to the thermal expansion amount of the valve body in the reverse direction of the thermal expansion, the amount and the direction of the thermal expansion being estimated in advance.
Accordingly, in a stage before thermal expansion is generated, the eccentricity is given in response to the thermal expansion amount from the center of the valve body in the reverse direction of the thermal expansion, the amount and the direction of the thermal expansion being taken into consideration in advance. Hence, the contact due to thermal expansion difference between the outer diameter of the protrusion and the exhaust gas passage hole can be avoided.
Further, another preferable embodiment of the above-disclosed invention is the waste gate valve device, wherein a chamfer is formed along all the circumference of an opening end of an exhaust gas passage hole of the valve seat part, the chamfer corresponding to the connecting part of a root part and the valve body of the protrusion.
Accordingly, thanks to the chamfer formed as described above, the sticking force acting on the sticking substance is relieved. Thus, sticking of the sticking substance can be prevented.

Further, the valve body repeatedly collides with the seat face of the valve seat part, and an inner periphery surface of the seat face comes in contact with an outer periphery surface of the valve body with impact shocks. A countermeasure to deal with this problem is the following embodiment.

To be more specific, another preferable embodiment of the above-disclosed invention is the waste gate valve device, wherein

wherein

an external cover which covers the whole circumference of the valve body is provided on the upper side of the valve body provided with protrusion;

the external cover and the valve body are fixed to each other and integrated into one-piece, so as to configure a valve body with an external cover; and

the support arm is fitted to the external cover.

In this way, the external cover which covers the whole circumference of the valve body is provided on the upper side of the valve body configured together with the external cover. Thus, the sturdiness of the valve body is enhanced. Further, the opening and closing force from the support arm supporting the valve body works off a line through a center of the valve body, and can be distributed over the contacting surface on the upper side of the valve body. Thus, evenly distributed force works on the outer circumference side of the valve body; and, the deformation of the valve body can be prevented and the sealing performance can be enhanced.

Further, another preferable embodiment of the above-disclosed invention is the waste gate valve device, wherein an external cover which is extended in the diameter direction of the valve body and fixed to the valve body at pairs of both ends of a diameter direction is provided on the upper side of the valve body provided with the protrusion, and the supporting arm is fitted to the external cover.

In this way, the opening-and-closing force from the support arm supporting the valve body works off a line through a center of the valve body, and can be distributed over at pairs of both ends of a diameter direction. Thus, the sturdiness of the valve body against a bending deformation, namely, a deformation in which the outer circumferential side of the valve body is be bent so as to be opened is enhanced. And, the sealing performance can be enhanced.

Further, another preferable embodiment of the above-disclosed invention is the waste gate valve device, wherein

wherein

an external cover which is extended in four ways along radial directions of the valve body and fixed to the valve body at four locations along a circumference hoop direction is provided on the upper side of the valve body provided with the protrusion; and

the supporting arm is fitted to the external cover.

In this way, the opening and closing force from the support arm supporting the valve body works off a line through a center of the valve body, and can be distributed at four locations along a circumference hoop direction. the sturdiness of the valve body against a bending deformation, namely, a deformation in which the outer circumferential side of the valve body is be bent so as to be opened is enhanced. And, the sealing performance can be enhanced.

Effects of the Invention

According to the present invention, in the waste gate valve provided with the valve body of a swing movement type, the valve body of the waste gate valve is provided with a protrusion of a prescribed height on a touching side of the valve body where the valve body touches the seat face, the protrusion being configured so as to reduce an exhaust gas passage area of the communication. Hence, the ratio X (%) of the flow rate of a gas passing by the valve body can be proportionally increased with respect to the valve opening, in the whole range of the valve opening from the range where the valve opening is extremely small (almost in an opening range of 0 to 20 degrees) to a range of greater valve opening.

Thus, the control of the responsiveness of the exhaust turbine can be smoothly performed in the whole range of the valve opening of the waste gate valve.

BRIEF DESCRIPTION OF THE DRAWINGS

Fig. 1 shows a longitudinal cross section of a waste gate valve according to a first mode of the present invention;

Fig. 2(A) shows a relationship between the valve opening and the ratio of the flow rate of a gas passing through the waste gate valve W/G to the gas flow rate at the full opening of the waste gate valve W/G, in the first mode;

Fig. 2(B) as well as Fig. 2(C) shows an example of a longitudinal cross section of the waste gate valve according to a second mode of the present invention, two examples being shown in Figs. 2(B) and Fig. 2(C);

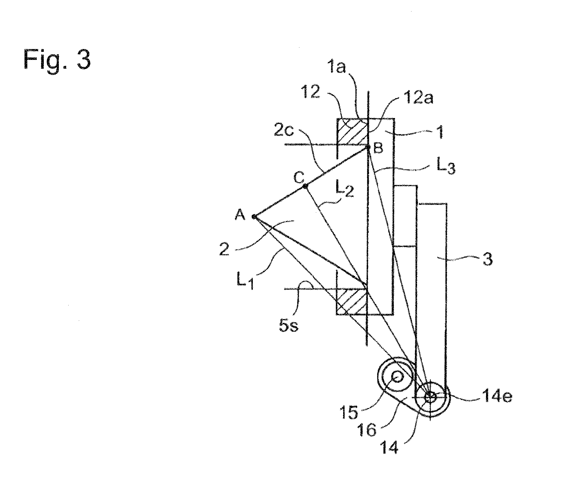

Fig. 3 shows a longitudinal cross section of the waste gate valve according to the second mode of the present invention;

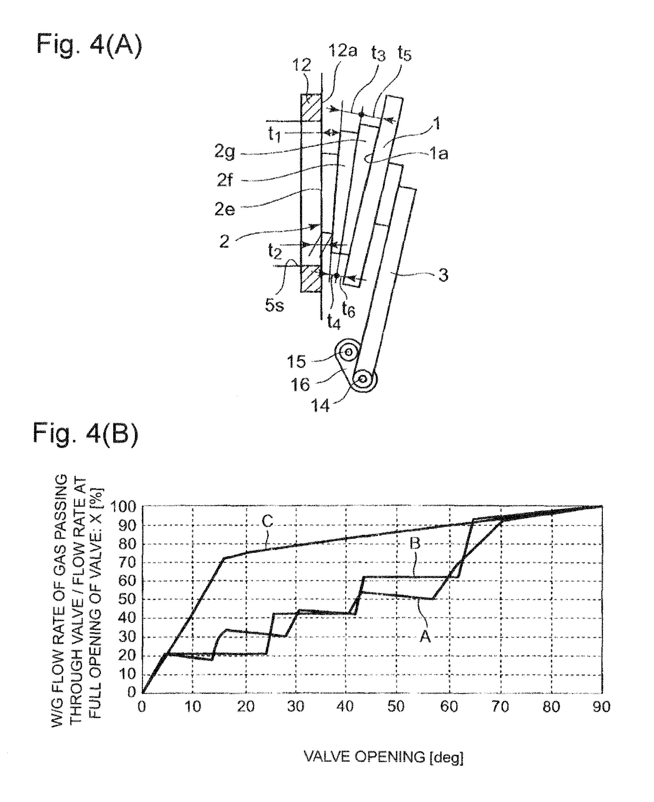

Fig. 4(A) shows a longitudinal cross section of the waste gate valve according to a third mode of the present invention;

Fig. 4(B) shows a relationship between the valve opening and the ratio of the flow rate of a gas passing through the waste gate valve W/G to the gas flow rate at the full opening of the waste gate valve W/G, in the third mode;

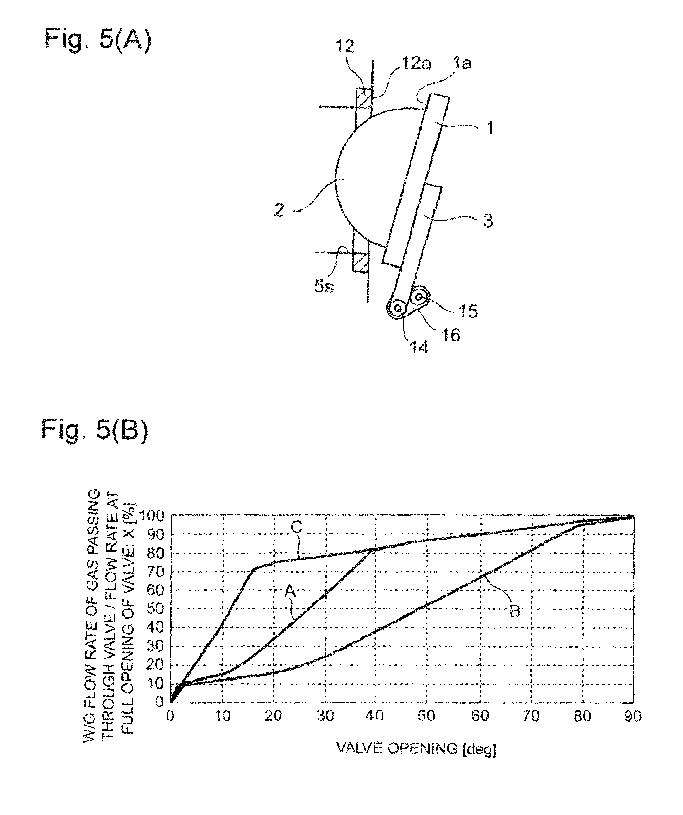

Fig. 5(A) shows a longitudinal cross section of the waste gate valve according to a fourth mode of the present invention;

Fig. 5(B) shows a relationship between the valve opening and the ratio of the flow rate of a gas passing through the waste gate valve W/G to the gas flow rate at the full opening of the waste gate valve W/G, in the fourth mode;

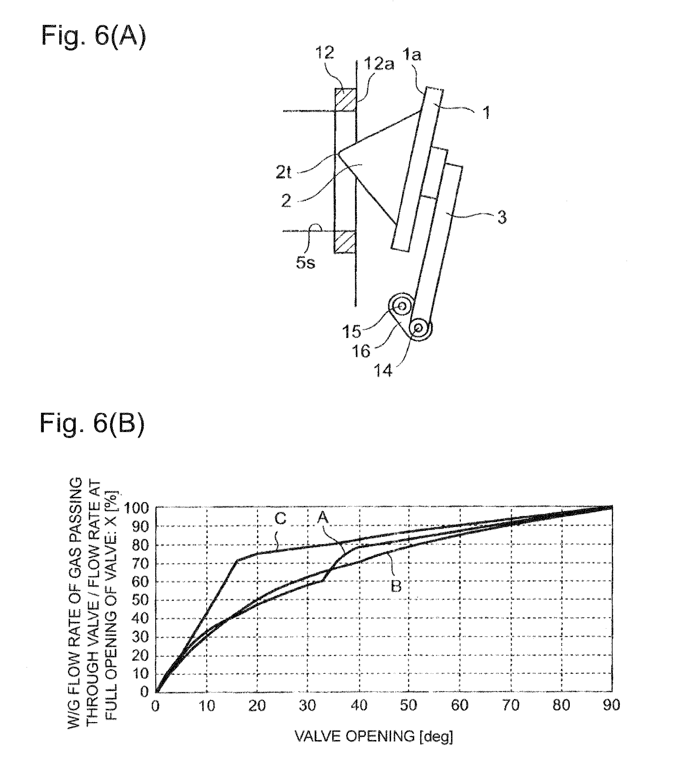

Fig. 6(A) shows a longitudinal cross section of the waste gate valve according to a fifth mode of the present invention;

Fig. 6(B) shows a relationship between the valve opening and the ratio of the flow rate of a gas passing through the waste gate valve W/G to the gas flow rate at the full opening of the waste gate valve W/G, in the fifth mode;

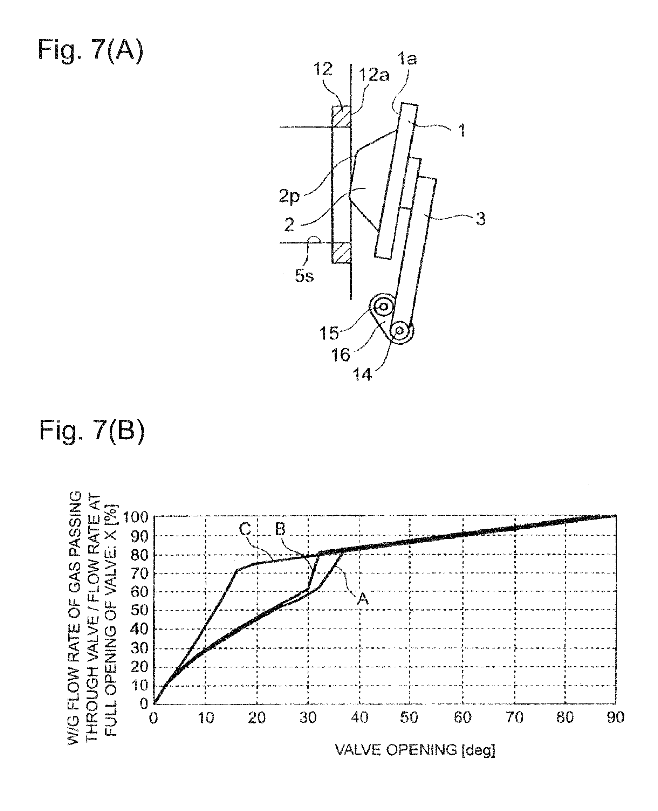

Fig. 7(A) shows a longitudinal cross section of the waste gate valve according to a sixth mode of the present invention;

Fig. 7(B) shows a relationship between the valve opening and the ratio of the flow rate of a gas passing through the waste gate valve W/G to the gas flow rate at the full opening of the waste gate valve W/G, in the sixth mode;

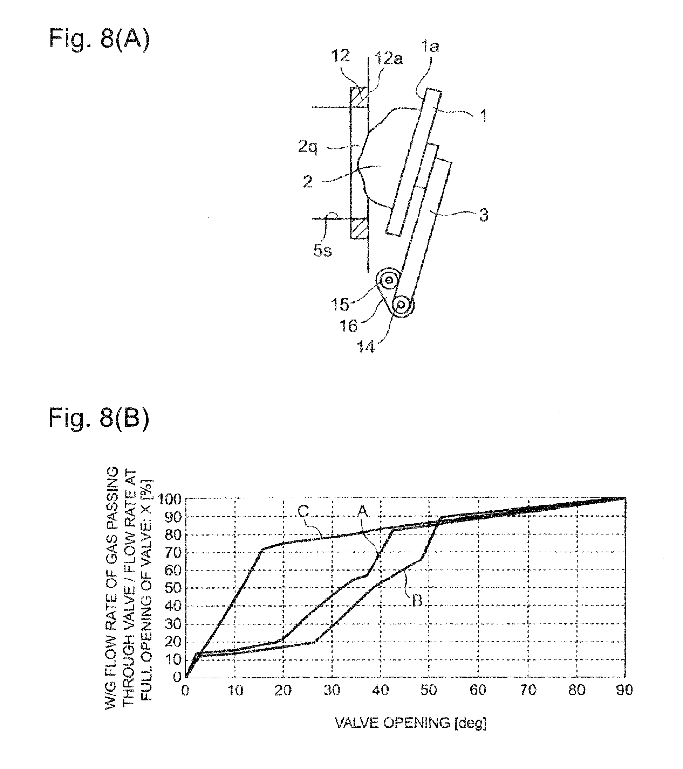

Fig. 8(A) shows a longitudinal cross section of the waste gate valve according to a seventh mode of the present invention;

Fig. 8(B) shows a relationship between the valve opening and the ratio of the flow rate of a gas passing through the waste gate valve W/G to the gas flow rate at the full opening of the waste gate valve W/G, in the seventh mode;

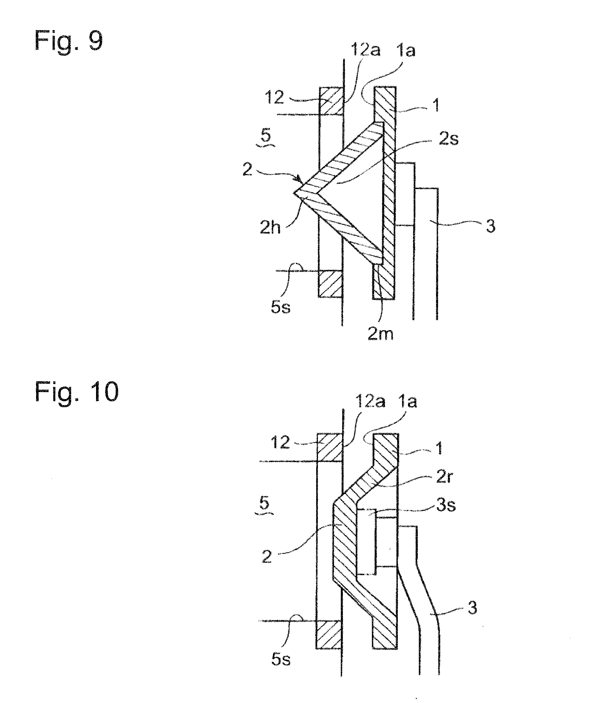

Fig. 9 shows a longitudinal cross section of the waste gate valve according to an eighth mode of the present invention;

Fig. 10 shows a longitudinal cross section of the waste gate valve according to a ninth mode of the present invention;

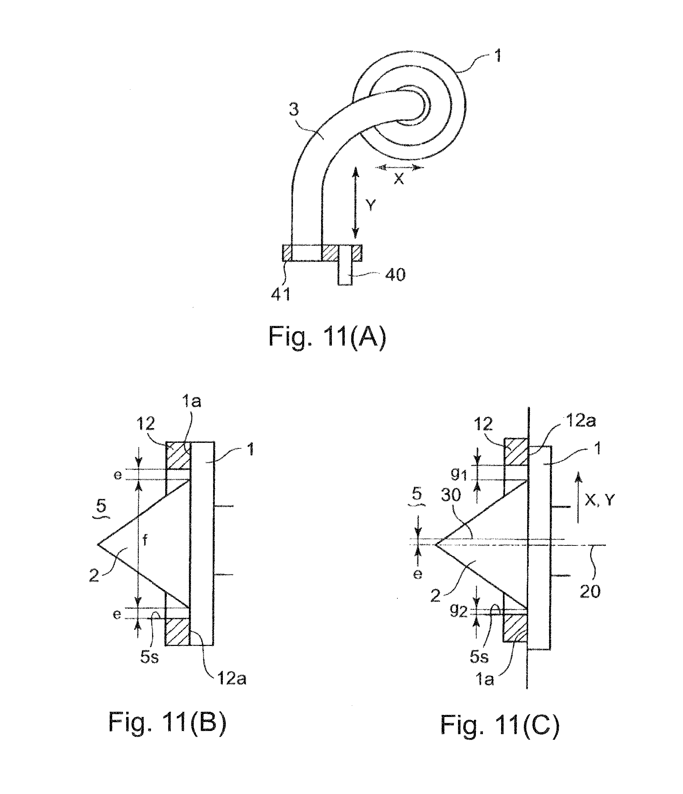

Fig. 11(A) shows a front view of the waste gate valve according to a tenth mode as well as an eleventh mode of the present invention;

Fig. 11(B) shows a longitudinal cross section of the waste gate valve according to the tenth mode;

Fig. 11(C) shows a longitudinal cross section of the waste gate valve according to the eleventh mode;

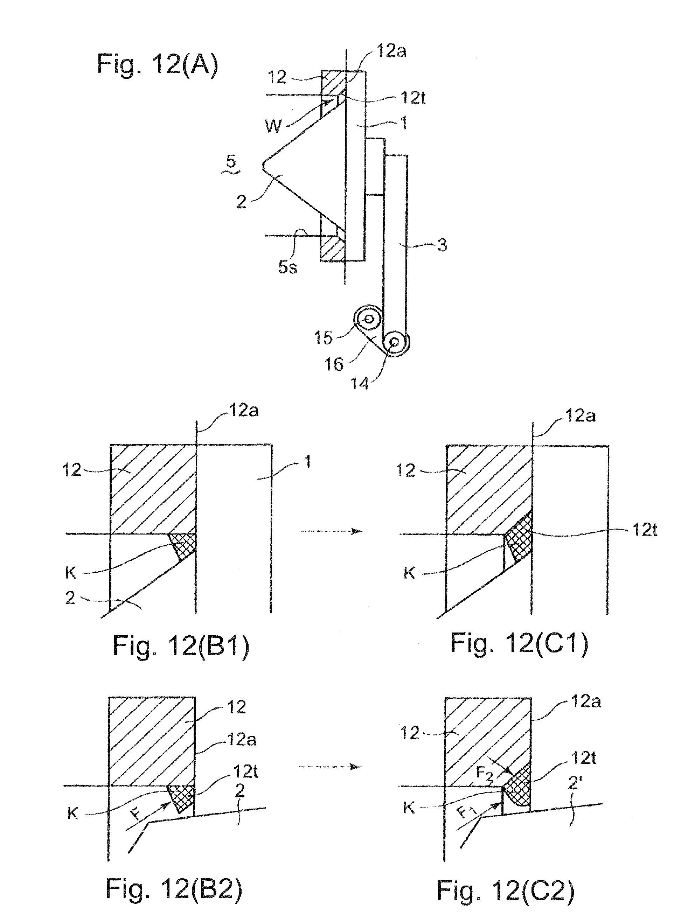

Fig. 12(A) shows a longitudinal cross section of the waste gate valve according to the twelfth mode of the present invention;

each of Figs. 12(B1), 12(B2), 12(C1) and 12(C2) shows an enlargement of the part W in Fig. 12(A);

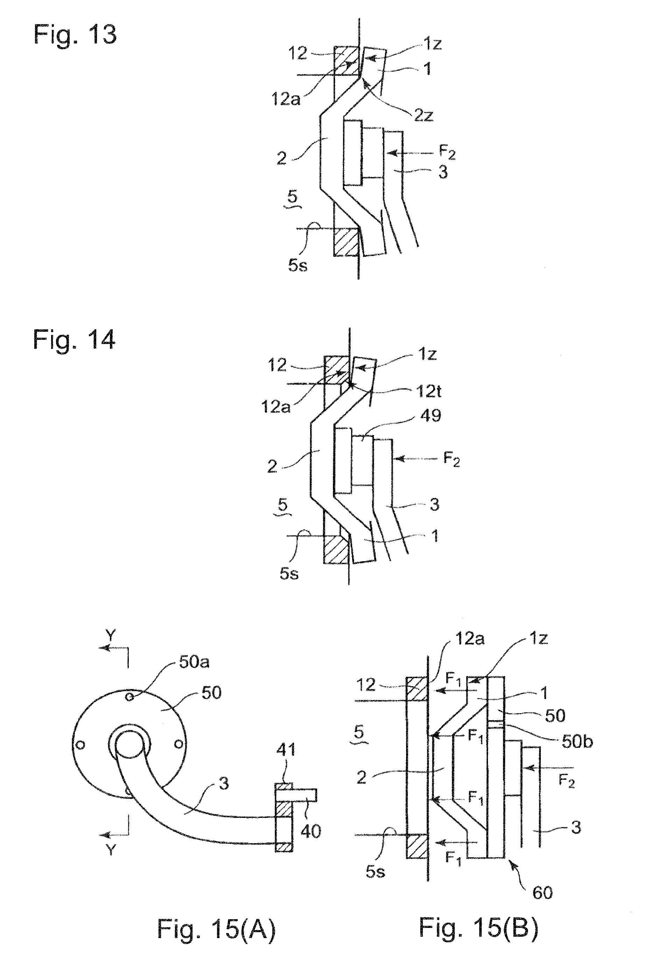

Fig. 13 shows a longitudinal cross section of the waste gate valve in order to explain a thirteenth mode, a fourteenth mode, a fifteenth mode and a sixteenth mode of the present invention;

Fig. 14 shows a longitudinal cross section of the waste gate valve according to the thirteenth mode of the present invention;

Fig. 15(A) shows a front view of the waste gate valve according to the fourteenth mode of the present invention;

Fig. 15(B) shows a Y-Y cross-section of Fig. 15(A);

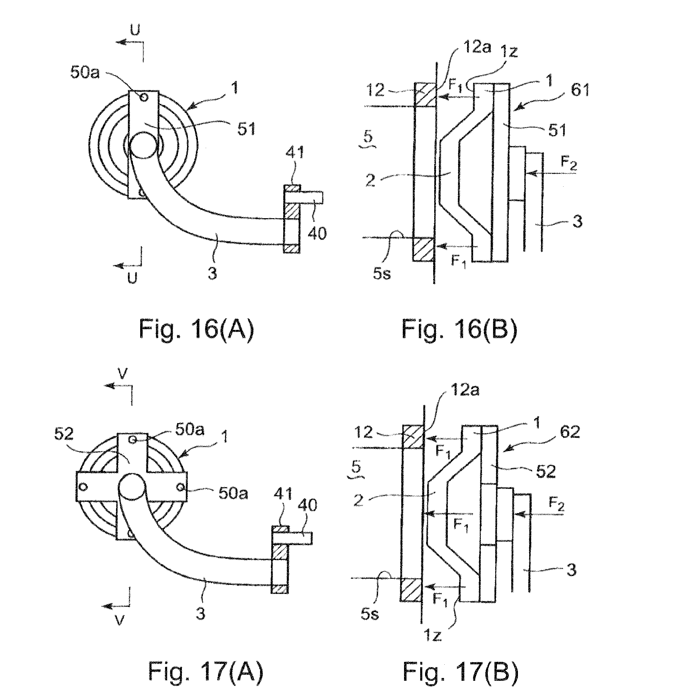

Fig. 16(A) shows a front view of the waste gate valve according to the fifteenth mode of the present invention;

Fig. 16(B) shows a U-U cross-section of Fig. 16(A);

Fig. 17(A) shows a front view of the waste gate valve according to the sixteenth mode of present invention;

Fig. 17(B) shows a V-V cross-section of Fig. 17(A);

Fig. 18(A) shows a longitudinal cross section of a driving part of the waste gate valve according to a conventional technology;

Fig. 18(B) shows an A-A cross-section of 18(A);

Fig. 19 shows a longitudinal cross section of the waste gate valve according to the conventional technology disclosed in Patent Reference 1; and

Fig. 20 shows a general relationship between the valve opening and the ratio of the flow rate of a gas passing through the waste gate valve W/G to the gas flow rate at the full opening of the waste gate valve W/G.

DETAILED DESCRIPTION OF THE PREFERRED MODES AND EMBODIMENTS

Hereafter, the present invention will be described in detail with reference to the modes or embodiments shown in the figures. However, the dimensions, materials, shape, the relative placement and so on of a component described in these modes or embodiments shall not be construed as limiting the scope of the invention thereto, unless especially specific mention is made.

(First Mode)

Fig. 1 shows a longitudinal cross section of a waste gate valve according to a first mode of the present invention. Fig. 2(A) shows a relationship between the valve opening and the ratio of the flow rate of a gas passing through the waste gate valve W/G to the gas flow rate at the full opening of the waste gate valve W/G, in the first mode. Fig. 2(B) as well as Fig. 2(C) shows an example of a longitudinal cross section of the waste gate valve according to a second mode of the present invention; namely, two examples are shown in Figs. 2(B) and Fig. 2(C).

As shown in Fig. 18, in a waste gate valve 100, a flow of exhaust gas supplied from an engine (not shown) to the turbine 2 through an exhaust gas passage 11 is branched from the exhaust gas passage 11 on an upstream side of the turbine 2; the exhaust gas streaming an exhaust bypass passage 5 bypasses the turbine 2. Thus, the exhaust gas passage 11 communicates with an exhaust outlet passage 18s via the waste gate valve.

In other words, in the waste gate valve 100, a valve body 1 opens and closes a valve seat part 12 of the exhaust bypass passage 5 by a to-and-fro movement of the valve body. As is the case with the arrow line in Fig. 18(B), when the waste gate valve is opened, the branched exhaust gas streams from the exhaust gas passage 11 to the exhaust outlet passage 18s, as shown by the arrow line S in Fig. 1.

In Fig. 1, the waste gate valve 100 is provided with a support shaft 14 which is, via a connecting arm 16, connected to a connecting pin that is connected to a driving part provided with an actuator. The valve body 1 is fixed to a free end part of an arm 3 which moves to-and-fro along an arc line around the support shaft 14. Thus, the communication between the exhaust bypass passage 5 and the exhaust outlet passage 18 is opened and closed by a swing movement of the arm 3. And, in response to the swing movement of the arm 3, when a seat surface 1a of the valve body 1 touches a seat face 12a of the valve seat part 12, the waste gate valve 100 is fully closed.

In Fig. 1, on an underside surface (i.e. the seat surface 1a hereby), a protrusion 2 which is configured with two-stage truncated cone is fixed; that is, the protrusion 2 is formed with a first circular cone 2a fixed on the seat surface 1a of the valve body 1 and a second circular cone 2b connected to an end part of the first circular cone 2a. Hereby, when a generating line of the first circular cone 2a crosses the seat surface 1a, an inclination angle $\theta 1$ is formed between the generating line and the seat surface 1a. Further, when a generating line of the second circular cone 2b crosses the seat surface 1a, an inclination angle $\theta 2$ is formed between the generating line and the seat surface 1a. In addition, the angle $\theta 2$ is small than the angle $\theta 1$, the vertex side 2y of the second circular cone 2b is truncated so that a flat truncated cone is formed. In this way, two stage truncated cone is configured.

It is now explained how the inclination angle $\theta 1$ of the first circular cone and the inclination angle $\theta 2$ of the second circular cone are formed.

In the configuration of the protrusion provided with the two-stage truncated cone as described above, in order to perform a fine tuning of flow rate, it is required that the inclination angles $\theta 1$ as well as $\theta 2$ regarding the generating line of the protrusion 2 and the seat surface 1a be greater. However, a locus of an end part of the protrusion 2 is formed as shown by the line of an arc in Fig. 1; thus, the height of the protrusion 2 is limited to a certain level so as to avoid the interference of the protrusion 2 and an exhaust gas passage hole 5s.

When the inclination angles $\theta 1$ and $\theta 2$ regarding the generating line of the protrusion 2 are taken at great levels, the fine turning of flow rate can be performed. However, when the angles between the generating line of the protrusion 2 and the seat surface 1a becomes great, the locus of the end part of the protrusion 2 forms an arc shape as shown in Fig. 1 and the height of the protrusion has to be low. Accordingly, as shown in Fig. 2(C), when the valve opening $\theta 5$ reaches 17 degrees under a condition that the angle $\theta 3$ between the generating line of the protrusion 2 and the seat surface 1a exceeds 80 degrees, the effect of the protrusion 2 on the flow rate tuning is lost.

Further, as shown in Fig. 2(B), when the angle between the generating line of the protrusion 2 and the seat surface 1a is smaller than 30 degrees, the effect on the flow rate tuning is small. Further, the flow rate tuning effect brought by the protrusion 2 lasts only up to the opening of 17 degrees.

Hence, the angle $\theta 1$ between the generating line of the protrusion 2 and the seat surface 1a is set so as to be equal or smaller than 80 degrees and equal to or greater than 30 degrees.

In spite of the angle setting of the above-described example, since the protrusion 2 is formed by combining the first circular cone 2a and the second circular cone 2b as shown in Fig. 1, the inclination angle $\theta$ ($\theta 1$, $\theta 2$) can be set in a range of 30 to 90 degrees (i.e. $30 < \theta < 90$).

When the inclination angle $\theta$ ($\theta 1$, $\theta 2$) is set in the above-described range, the relationship between the valve opening and the ratio X (%) of the flow rate of a gas passing through the waste gate valve W/G to the gas flow rate at the full opening of the waste gate valve W/G is expressed by the line A as shown in Fig. 2(A). Thus, the relationship between the ratio X and the valve opening gets closer to an ideal relationship line B along which the ratio X (%) proportionally increases with respect to the valve opening.

In this way, by forming the protrusion 2 with combining the first circular cone 2a and the second circular cone 2b, the flow rate tuning effect by the protrusion 2 can be achieved when the inclination angles $\theta 1$ and $\theta 2$ are limited to levels in a wide range of the opening, namely, in the range of $30 < \theta 2 < \theta 1 < 90$.

In the next place, the effect of the first mode whose configuration is described as above is now explained.

In Fig. 1, the waste gate valve 100 is provided with the valve body 1 which is combined with the protrusion 2 configured with a two-stage truncated cone combining the first circular cone 2a and the second circular cone 2b; when the waste gate valve 100 moves from the fully-closed position by a swing movement of the support arm 3 toward the direction Q and the seat surface 1a of the valve body 1 detaches from the seat face 12a of the valve seat part 12, the waste gate valve 100 is opened.

When such waste gate valve 100 configured as described above is minutely opened, the exhaust gas streams from the exhaust bypass passage 5 to the exhaust outlet passage 18s, as shown by the streamline S in Fig. 1.

In such waste gate valve 100 provided with the valve body 1 of a swing-movement type, when the opening of the waste gate valve 100 is within a small side range, the valve body 1 which is combined with the protrusion 2 configured with a two-stage truncated cone combining the first circular cone 2a and the second circular cone 2b is arranged. Hence, as shown in Fig. 2(A), the relationship between the valve opening (the opening of the valve body) and the ratio X of the flow rate of a gas passing through the waste gate valve W/G to the gas flow rate at the full opening of the waste gate valve W/G is expressed by the line A in Fig. 2(A). Thus, the relationship between the ratio X (%) and the valve opening can almost get closer to an ideal relationship line B along which the ratio X (%) proportionally increases with respect to the valve opening.

To be more specific, by providing the valve body 1 which is combined with the protrusion 2 configured with a two-stage truncated cone combining the first circular cone 2a and the second circular cone 2b, the increase of the flow rate of the exhaust gas can be constrained when the valve opening is in an extremely small range (approximately 0 to 20 degrees). In this way, the steep increase of flow rate of the exhaust gas passing through the waste gate valve can be constrained.

Consequently, in the waste gate valve 100 provided with the valve body 1 of a swing movement type, by arranging the valve body 1 which is combined with the protrusion 2 configured with a two-stage truncated cone combining the first circular cone 2a and the second circular cone 2b, the ratio X (%) of the flow rate of a gas passing by the valve body 1 can be proportionally increased with respect to the valve opening, in the whole range of the valve opening from a range where the valve opening is extremely small (approximately 0 to 20 degrees) to a range of greater valve opening. Thus, the control of the responsiveness of the exhaust turbine can be smoothly performed in the whole range of the valve opening of the waste gate valve 100.

(Second Mode)

Fig. 3 shows a longitudinal cross section of the waste gate valve according to the second mode of the present invention.

With regard to the protrusion 2 in this second mode, the distance from a swing movement center 14e of the support arm 3 to a tip end A of the protrusion 2 is taken as L1; the distance from a swing movement center 14e of the support arm 3 to a farthest point C of the protrusion 2 is taken as L2; and, the distance from a swing movement center 14e of the support arm 3 to an opening end of the exhaust gas passage hole 5s is taken as L3. Thereby, the protrusion 2 is configured so that L3 > L1 and L3 > L2.

Except this point, the configuration of the second mode is the same as the configuration of the first mode; and, the same components in the second mode as in the first mode are given common symbols (numerals or alphanumeric symbols).

According to the second mode as described above, since the distance L3 is greater than the distance L1 and the distance L3 is greater than the distance L2, the protrusion 2 is prevented from coming in contact with the opening edge of the exhaust gas passage hole 5s, when the protrusion 2 moves inside of the exhaust gas passage hole 5s. Hereby, as already described, the distances L1, L2 and L3 are the distance from a swing movement center 14e of the support arm 3 to a tip end A of the protrusion 2, the distance from a swing movement center 14e of the support arm 3 to a farthest point C of the protrusion 2 and the distance from a swing movement center 14e of the support arm 3 to an opening edge of the exhaust gas passage hole 5s, respectively.

In the next place, a 13th, a 14th, a 15th and a 16th modes of the present invention are explained, wherein the protrusion 2 moves parallel to the exhaust gas passage hole 5s in response the valve opening even when the angle changes. In the configuration as described, even in a case where the valve body 1 moves along an arc locus, an arbitrary area of the exhaust gas passage can be easily obtained.

(Third Mode)

Fig. 4(A) shows a longitudinal cross section of the waste gate valve according to a third mode of the present invention. Fig. 4(B) shows a relationship between the valve opening and the ratio of the flow rate of a gas passing through the waste gate valve W/G to the gas flow rate at the full opening of the waste gate valve W/G, in the third mode.

In this third mode, the protrusion 2 is configured with a plurality of circular discs (in this example, 3 discs) 2e, 2f and 2g; the thicknesses of the discs (i.e. circular cylinder column) 2e, 2f and 2g are t1 to t2, t3 to 4, and t5 to t6, respectively; in this way, the thickness of the circular discs changes in the radial direction. The circular discs are superposed and connected in a body as the protrusion 2, which is fixed to the valve body 1. Thereby, in superposing the circular discs, the circular discs are arranged in an inclined condition so that the circular discs 2e, 2f and 2g do not interfere with the exhaust gas passage hole 5s when the valve body 1 is opened.

Except these points, the configuration of the third mode is the same as the configuration of the first mode; and, the same components in the third mode as in the first mode are given common symbols (numerals or alphanumeric symbols).

In the third mode as described above, the relationship between the valve opening and the ratio X (%) of the flow rate of a gas passing through the waste gate valve W/G to the gas flow rate at the full opening of the waste gate valve W/G is shown in Fig. 4(B). The relationship of the valve opening and the ratio X (%) becomes the line A as shown in Fig. 4(B). In this way, the relationship between the ratio X (%)and the valve opening can get closer to an ideal relationship line B along which the ratio X (%)regarding the passing-through gas proportionally increases with respect to the valve opening. Incidentally, the ideal relationship line B in Fig. 4(B) corresponds to not a valve body of a swing movement type in which the support arm 3 swings but a valve body of a slide type in which the valve body slides in the axis direction of the exhaust gas passage hole 5s. In other words, the ideal line B shows the ratio X (%) regarding the passing-through gas in a case where the valve body moves along the axis line of the exhaust gas passage hole 5s (this situation is the same in the following modes and drawings up to Fig. 8 of the seventh mode).

(Fourth Mode)

Fig. 5(A) shows a longitudinal cross section of the waste gate valve according to a fourth mode of the present invention. Fig. 5(B) shows a relationship between the valve opening and the ratio X of the flow rate of a gas passing through the waste gate valve W/G to the gas flow rate at the full opening of the waste gate valve W/G, in the fourth mode. In this fourth mode, the protrusion 2 is configured with a hemisphere, whose root part is fixed to the seat surface 1a. Except this point, the configuration of the fourth mode is the same as the configuration of the first mode; and, the same components in the fourth mode as in the first mode are given common symbols.
In the fourth mode as described above, the relationship between the valve opening and the ratio X (%) of the flow rate of a gas passing through the waste gate valve W/G to the gas flow rate at the full opening of the waste gate valve W/G is shown in Fig. 5(B). Thus, the relationship is expressed by the line A as shown in Fig. 5(B). In this way, the relationship between the ratio X (%) and the valve opening can almost get closer to an ideal relationship line B along which the ratio X (%) regarding the passing-through gas proportionally increases with respect to the valve opening.

(Fifth Mode)

Fig. 6(A) shows a longitudinal cross section of the waste gate valve according to a fifth mode of the present invention. Fig. 6(B) shows a relationship between the valve opening and the ratio X of the flow rate of a gas passing through the waste gate valve W/G to the gas flow rate at the full opening of the waste gate valve W/G, in the fifth mode. In this fifth mode, the protrusion 2 is formed in a shape of a circular cone which has a pointed tip part 2t, and the large-diameter root part of the protrusion is fixed to the seat surface 1a.
Except this point, the configuration of the fifth mode is the same as the configuration of the first mode; and, the same components in the fifth mode as in the first mode are given common symbols.
In the fifth mode as described above, the relationship between the valve opening and the ratio X (%) of the flow rate of a gas passing through the waste gate valve W/G to the gas flow rate at the full opening of the waste gate valve W/G is shown in Fig. 6(B). Thus, the relationship is expressed by the line A as shown in Fig. 6(B). In this way, the relationship between the ratio X (%)and the valve opening can get closer to an ideal relationship line B along which the ratio X (%) regarding the through-flow proportionally increases with respect to the valve opening.

(Sixth Mode)

Fig. 7(A) shows a longitudinal cross section of the waste gate valve according to a sixth mode of the present invention. Fig. 7(B) shows a relationship between the valve opening and the ratio X of the flow rate of a gas passing through the waste gate valve W/G to the gas flow rate at the full opening of the waste gate valve W/G, in the sixth mode. In this sixth mode, as shown in Fig. 7(A), the protrusion 2 is formed in a truncated cone whose tip end part forms a flat surface 2p, and the large-diameter root part of the protrusion is fixed to the seat surface 1a.
Except this point, the configuration of the sixth mode is the same as the configuration of the first mode; and, the same components in the sixth mode as in the first mode are given common symbols.
In the sixth mode as described above, the relationship between the valve opening and the ratio X (%) of the flow rate of a gas passing through the waste gate valve W/G to the gas flow rate at the full opening of the waste gate valve W/G is shown in Fig. 7(B). Thus, the relationship is expressed by the line A as shown in Fig. 7(B). In this way, the relationship between the ratio X (%)and the valve opening can get closer to an ideal relationship line B along which the ratio X (%) regarding the through-flow proportionally increases with respect to the valve opening.

(Seventh Mode)

Fig. 8(A) shows a longitudinal cross section of the waste gate valve according to a seventh mode of the present invention. Fig. 8(B) shows a relationship between the valve opening and the ratio of the flow rate X of a gas passing through the waste gate valve W/G to the gas flow rate at the full opening of the waste gate valve W/G, in the seventh mode. In this seventh mode, the protrusion 2 is formed in a distorted hemisphere shape whose protrusion surface 2q is warped, and the root part of the protrusion 2 is fixed to the seat surface 1a.

Except this point, the configuration of the seventh mode is the same as the configuration of the first mode; and, the same components in the seventh mode as in the first mode are given common numerals.

In the seventh mode as described above, the relationship between the valve opening and the ratio X (%) of the flow rate of a gas passing through the waste gate valve W/G to the gas flow rate at the full opening of the waste gate valve W/G is shown in Fig. 8(B). Thus, the relationship is expressed by the line A as shown in Fig. 8(B). In this way, the relationship between the ratio X (%) and the valve opening can get closer to an ideal relationship line B along which the ratio X (%) regarding the through-flow proportionally increases with respect to the valve opening.

(Eighth Mode)

Fig. 9 shows a longitudinal cross section of the waste gate valve according to an eighth mode of the present invention.

In this eighth mode, the protrusion 2 is provided with a protrusive part 2h which protrudes from the valve body 1 toward the exhaust bypass passage 5, and a hollow space 2s is formed inside of the protrusive part 2h. Further, a root part 2m of the protrusive part 2h is screwed into the underside surface of the valve body 1. The protrusive part 2h may be integrated into the valve body 1; or, the protrusive part 2h may be solder-jointed to the valve body 1.

Except this point, the configuration of the eighth mode is the same as the configuration of the first mode; and, the same components in the eighth mode as in the first mode are given common symbols.

In the eighth mode as described above, the hollow space 2s is formed inside of the protrusive part 2h. Thus, the weight of the valve body 1 together with the protrusion 2 is reduced. Hence, the responsiveness is improved. Further, since the weight is reduced, the risk of damage occurrence can be reduced. Moreover, the driving power to drive the valve body 1 together with the protrusion 2 can be reduced.

In addition, the protrusion 2 alone can be removed from the valve body 1; namely, the protrusion 2 alone can be easily taken apart from and assembled into the valve body 1. Further, the protrusion 2 can be easily replaced by new one.

(Ninth Mode)

Fig. 10 shows a longitudinal cross section of the waste gate valve according to a ninth mode of the present invention.

In this ninth mode, the protrusion 2 is formed with the valve body 1 and the protrusive portion 2r (i.e. the protrusion 2 in this mode) which protrudes from the valve body 1 toward the exhaust bypass passage 5s, the protrusive portion 2r being made of sheet metal and integrated into the valve body 1. Further, a reinforcing plate 3s is provided on the backside of the protrusion 2.

Except these points just described above, the configuration of the ninth mode is the same as the configuration of the first mode; and, the same components in the ninth mode as in the first mode are given common symbols.

In the ninth mode as described above, the protrusive portion 2r made of sheet metal which protrudes from the valve body 1 toward the exhaust bypass passage 5 is integrated into the valve body 1. Thus, in comparison with a case where the protrusion 2 is simply provided, the weight of the valve body 1 together with the protrusive portion 2r is reduced. Hence, the responsiveness is improved. Further, since the valve body 1 and the protrusive portion 2r form an integrated body made of sheet metal, the risk of damage occurrence can be reduced. Moreover, the driving power to drive the valve body 1 together with the protrusive portion 2r can be reduced. Further, as described just above, since the valve body 1 and the protrusive portion 2r form an integrated body made of sheet metal, the production cost can be reduced.

(Tenth Mode)

Fig. 11(A) shows a front view of the waste gate valve according to a tenth mode as well as an eleventh mode of the present invention. Fig. 11(B) shows a longitudinal cross section of the waste gate valve according to the tenth mode. In this tenth mode, in order that the joint part of the protrusion 2 and the valve body 1 does not come in contact with the exhaust gas passage hole 52s, a sufficient clearance space e is set between the outer diameter at the joint part of the protrusion 2 and the valve body 1 and the inner periphery diameter of the exhaust gas passage hole 52s (5s?), in consideration of thermal expansion difference between the valve body and the protrusion. In other words, the inner diameter of the exhaust gas passage hole 52s is made larger than the outer diameter f of the protrusion 2, by the thermal expansion difference.

Except these points just described above, the configuration of the tenth mode is the same as the configuration of the first mode; and, the same components in the tenth mode as in the first mode are given common symbols.

In the tenth mode as described above, the sufficient clearance space e is provided between the outer diameter f of the protrusion 2 and the inner periphery diameter of the exhaust gas passage hole 52s. Accordingly, the contact between the protrusion 2 and the valve body 1 can be avoided, the contact being attributable to the thermal expansion difference in the direction X or Y.

(Eleventh Mode)

Fig. 11(A) shows a front view of the waste gate valve according to a tenth mode as well as an eleventh mode of the present invention. Fig. 11(C) shows a longitudinal cross section of the waste gate valve according to the eleventh mode.

In this eleventh mode, in connecting the protrusion 2 and the valve body 1, an eccentricity e is provided between a center line 20 of the protrusion 2 and a center line 30 of the valve body 1, in a thermal expansion direction X; thereby, the joint part of the protrusion 2 and the valve body 1 is previously shifted along a reverse direction of the thermal expansion direction X or Y (hereby, the numerals 20 and denote a center line of the protrusion 2 and a center line of the valve body 1). In this way, different clearances g1 and g2 are provided around the outer periphery of the protrusion 2.

Except these points just described above, the configuration of the eleventh mode is the same as the configuration of the first mode; and, the same components in the eleventh mode as in the first mode are given common symbols.

In the eleventh mode as described above, in consideration of the thermal expansion, in connecting the protrusion 2 and the valve body 1, an eccentricity e is provided between the a center line 20 of the protrusion 2 and a center line 30 of the valve body 1, so that the joint part of the protrusion 2 and the valve body 1 is previously shifted along a reverse direction of the thermal expansion direction X or Y, before the protrusion 2 and the valve body 1 is connected. Accordingly, even when the protrusion 2 arranged with the eccentricity moves along the thermal expansion direction X or Y, the contact between the outer diameter of the protrusion 2 and the exhaust gas passage hole 52scan be avoided.

(Twelfth Mode)

Fig. 12(A) shows a longitudinal cross section of the waste gate valve according to the twelfth mode of the present invention; each of Figs. 12(B1), 12(B2), 12(C1) and 12(C2) shows an enlargement of the part W in Fig. 12(A).

In this twelfth mode, a chamfer 12t is formed along all the circumference of an opening end of the exhaust gas passage hole 52s of the seat face 12a of the valve seat part 12, the opening end corresponding to the connecting part of the protrusion root part and the valve body 1.

Except this point just described above, the configuration of the eleventh mode is the same as the configuration of the first mode; and, the same components in the eleventh mode as in the first mode are given common symbols.

In the twelfth mode as described above, the chamfer 12t is formed along all the circumference of the seat face 12a of the valve seat part 12, all the circumference corresponding to the connecting part of the protrusion root part and the valve body 1. Hence, as shown in Fig. 12(B1),

when the valve body 1 moves along an arc line as well as

when a sticking substance K is caught in a neighborhood of an intersection area where the exhaust gas passage hole 5s of the valve seat part 12 and the root part of the protrusion 2 come closer to each other, then a sticking force F (as shown in Figs. 12(B2) and 12(C1)) acts on the sticking substance K. On the other hand, since the chamfer 12t is formed along all the circumference of the seat face 12a of the valve seat part 12, the sticking force F1 (as shown in Fig. 12(C2)) acting on the sticking substance K is relieved. Thus, sticking of the sticking substance K can be prevented.

As shown in Fig. 13, in the waste gate valve 100, when the a force F2 acts on a central support point, the valve body 1 bends and a great contact pressure is generated at a contacting area 2z where a corner of the valve seat part 12 comes in contact with the underside surface of the valve body 1.In the following 13th, 14th, 15th and 16th modes, countermeasures against the great contact pressure at the contacting area 2z are described.

(Thirteenth Mode)

Fig. 14 shows a longitudinal cross section of the waste gate valve according to the thirteenth mode of the present invention.

In this thirteenth mode, as is the case with the twelfth mode, a chamfer 12t is formed along all the circumference of the seat face 12a of the valve seat part 12, and an external cover 49 covering the valve body 1 is provided on the backside of the valve body 1. A force F2 acts on a central support point.

Except these points just described above, the configuration of the thirteenth mode is the same as the configuration of the first mode; and, the same components in the thirteenth mode as in the first mode are given common symbols.

According to the thirteenth mode as described above, the chamfer 12t is provided. Thus, the great contact pressure generated at a contacting area 2Z where the corner of the valve seat part 12 comes in contact with the underside surface of the valve body 1 can be reduced.

(Fourteenth Mode)

Fig. 15(A) shows a front view of the waste gate valve according to the fourteenth mode of the present invention. Fig. 15(B) shows a Y-Y cross section of Fig. 15(A).
In this fourteenth mode, an external cover 50 which covers the whole circumference of the valve body 1 is provided on the upper side of the valve body 1 provided with protrusion 2; and, the external cover 50 and the valve body 1 configure an integrated member, namely, a valve body 60 with an external cover. The external cover 50 and the valve body 1 which are just described above are coupled by means of four screws 50a. In addition, an air ventilation hole 50b for ventilating the air in the valve body with the external cover is bored in the external cover 50. A force F2 acts on a central support point.
Except these points just described above, the configuration of the fourteenth mode is the same as the configuration of the first mode; and, the same components in the fourteenth mode as in the first mode are given common symbols.
According to the fourteenth mode as described above, the external cover 50 which covers the whole circumference of the valve body 1 is provided on the upper side of the valve body 1 provided with protrusion 2; and, the external cover 50 and the valve body 1 configure an integrated member, namely, the valve body 60 with the external cover. Hence, the sturdiness of the valve body 1 can be enhanced. Further, the acting force F2 is distributed not on the valve body center where the valve body is supported but over the contacting surface on the upper side of the valve body 60 with the external cover (e.g. the force F2 is dispersed on four locations regarding forces F1). Accordingly, the valve body 60 with the external cover can support uniform force distributed on the outer periphery side of the valve body. In this way, the deformation of the valve body can be prevented and the sealing performance can be enhanced.

(Fifteenth Mode)

Fig. 16(A) shows a front view of the waste gate valve according to the fifteenth mode of the present invention. Fig. 16(B) shows a U-U cross-section of Fig. 16(A).
In this fifteenth mode, an external cover 51 which is extended in a radial direction of the valve body 1 and fixed to the valve body 1 at two locations on both end sides of the external cover 51 is provided on the upper side of the valve body 1 connected with the protrusion 2. The support arm 3 is attached to the external cover 51; and, the external cover 51 and the valve body 1 configure an integrated member, namely, a valve body 61 with an external cover. The external cover 51 and the valve body 1 which are just described above are coupled by means of two screws 50a.
Except these points just described above, the configuration of the fifteenth mode is the same as the configuration of the first mode; and, the same components in the fifteenth mode as in the first mode are given common symbols.
According to the fifteenth mode as described above, the external cover 51 which is extended in a radial direction of the valve body 1 and covers a radial direction of the valve body is provided on the upper side of the valve body 1 provided with the protrusion 2. The external cover 51 and the valve body 1 configure an integrated member, namely, the valve body 61 with the external cover. Further, the acting-force acting on the valve body is distributed over the contacting surface on the outer periphery side of the valve body 61 with the external cover (e.g. the acting force is dispersed on two locations regarding forces F1). Hence, the opening-closing force from the support arm 3 not acts on a center of the valve body but can be dispersed on both end sides of the radial direction at the outer periphery side of the valve body. Thus, the sturdiness of the valve body against a bending deformation, namely, a deformation in which the outer circumferential side of the valve body 1 is bent so that the outer periphery side is opened is enhanced. And, such a deformation can be prevented. Further, the sealing performance can be enhanced.

(Sixteenth Mode)

Fig. 17(A) shows a front view of the waste gate valve according to the sixteenth mode of present invention. Fig. 17(B) shows a V-V cross-section of Fig. 17(A).
In this sixteenth mode, on the upper side of the valve body 1 provided with the protrusion 2, an external cover 52 which is extended in four ways along radial directions of the valve body and fixed to the valve body at four locations along the circumference is provided. The supporting arm 3 is fitted to the external cover 52. The external cover 52 and the valve body configure an integrated member, namely, a valve body 62 with an external cover. The external cover 52 and the valve body 1 are connected to each other by means of four screws 50a.
Except these points just described above, the configuration of the sixteenth mode is the same as the configuration of the first mode; and, the same components in the sixteenth mode as in the first mode are given common symbols.
According to the sixteenth mode as described above, on the upper side of the valve body 1 provided with the protrusion 2, the external cover 52 which is extended in four ways along radial directions of the valve body and fixed to the valve body is provided. The external cover 52 and the valve body configure an integrated member, namely, the valve body 62 with the external cover. Further, the acting-force acting on the valve body is distributed over the contacting surface on the outer periphery side of the valve body 62 with the external cover (e.g. the acting force is dispersed on four locations regarding forces F1). Hence, the opening-closing force from the support arm 3 not acts on a center of the valve body but is able to be dispersed on the four sides of the radial directions at the outer periphery side of the valve body. Thus, the sturdiness of the valve body against a bending deformation, namely, a deformation in which the outer circumferential side of the valve body 1 is bent so that the outer periphery side is opened is enhanced. And, such a deformation can be prevented. Further, the sealing performance can be enhanced.

Industrial Applicability

The present invention can provide a waste gate valve device including, but not limited to, a waste gate valve of a swinging movement type, wherein: the passing flow rate ratio proportionally increase along and near to a linear line with respect to the valve opening, especially in a range where the valve opening is extremely small; and, the control of the responsiveness of the exhaust turbine can be smoothly performed over the whole opening range of the waste gate valve.

**Claims**

1. A waste gate valve device, comprising:

   an exhaust bypass passage through which an exhaust passage connected to an exhaust turbine driven by an exhaust gas from an engine communicates with an exhaust outlet passage, by bypassing the exhaust gas turbine; and
   a waste gate valve comprising a valve body which is fitted to a free end part of a support arm rotation-freely supported around a support shaft, and opens-and-closes a communication between the exhaust bypass passage and the exhaust outlet passage by a swing movement of the support arm, the waste gate valve being configured so as to be fully closed when the valve body touches a seat face of a valve seat part,
   wherein the valve body of the waste gate valve is provided with a protrusion of a prescribed height on a touching side where the valve body of the waste gate valve touches the seat face, the protrusion being configured so as to reduce an exhaust gas passage area of the communication.

2. The waste gate valve device according to claim 1, the protrusion comprising:

   a first circular cone whose outer generating line intersects with a seat surface of the valve body at an intersecting angle of $\theta 1$, the first circular cone being connected to the valve body; and
   a second circular cone whose outer generating line intersects with the seat surface of the valve body at an intersecting angle of $\theta 2$ that is smaller than the intersecting angle of $\theta 1$, the second circular cone being connected to an end part of the first circular cone,
   wherein the protrusion is formed with the first circular cone and the second circular cone so as to configure a two-stage circular cone.

3. The waste gate valve device according to claim 1,
   wherein a distance from a swing movement center of the support arm to a tip end of the protrusion is taken as L1;
   a distance from a swing movement center of the support arm to a farthest point of the protrusion is taken as L2; and
   a distance from a swing movement center of the support arm to an opening end of an exhaust gas passage hole is taken as L3,
   wherein

$$L3 > L1, \text{ and } L3 > L2.$$

4. The waste gate valve device according to claim 1,
   wherein the protrusion is configured with a plurality of circular column bodies, the thickness of each circular column body linearly varies in the radial direction of the circular column body, and

the circular column bodies are superposed and arranged so as not to interfere with an exhaust gas passage hole.

5. The waste gate valve device according to claim 1,
   wherein the protrusion is formed in a hemisphere-shape, whose root part is fixed to the valve body.

6. The waste gate valve device according to claim 1,
   wherein the protrusion is formed in a shape of a circular-cone-shape which has a pointed tip part, and the root large-diameter part of the protrusion is fixed to the valve body.

7. The waste gate valve device according to claim 1,
   wherein the protrusion is formed in a shape of a truncated cone-shape whose tip end part forms a flat surface, and the root large-diameter part of the protrusion is fixed to the valve body.

8. The waste gate valve device according to claim 1,
   wherein the protrusion is formed in a hemisphere-shape whose protrusion surface is distorted, and the root part of the protrusion is fixed to the valve body.

9. The waste gate valve device according to claim 1,
   wherein a hollow space is formed inside of the protrusion.

10. The waste gate valve device according to claim 1,
    wherein the valve body and the protrusion are made of sheet metal and integrated into one-piece.

11. The waste gate valve device according to claim 1,
    wherein a clearance is established between an exhaust gas passage hole and a joint part of the protrusion and the valve body, the clearance being configured so that the protrusion and the valve body does not come in contact with the exhaust gas passage hole even in a case where a thermal expansion of the valve body is generated.

12. The waste gate valve device according to claim 1,
    wherein the protrusion is fitted to the valve body with an eccentricity so that the eccentricity is given in response to the thermal expansion amount of the valve body in the reverse direction of the thermal expansion, the amount and the direction of the thermal expansion being estimated in advance.

13. The waste gate valve device according to claim 1,
    wherein a chamfer is formed along all the circumference of an opening end of an exhaust gas passage hole of the valve seat part, the chamfer corresponding to the connecting part of a root part and the valve body of the protrusion.

14. The waste gate valve device according to claim 1,
    wherein an external cover which covers the whole circumference of the valve body is provided on the upper side of the valve body provided with protrusion;
    the external cover and the valve body are fixed to each other and integrated into one-piece, so as to configure a valve body with an external cover; and
    the support arm is fitted to the external cover.

15. The waste gate valve device according to claim 1,
    wherein an external cover which is extended in the diameter direction of the valve body and fixed to the valve body at pairs of both ends of a diameter direction is provided on the upper side of the valve body provided with the protrusion, and
    the supporting arm is fitted to the external cover.

16. The waste gate valve device according to claim 1,
    wherein an external cover which is extended in four ways along radial directions of the valve body and fixed to the valve body at four locations along a circumference hoop direction is provided on the upper side of the valve body provided with the protrusion; and
    the supporting arm is fitted to the external cover.

Fig. 1

EXHAUST GAS

## Fig. 2(A)

## Fig. 2(B)          Fig. 2(C)

Fig. 3

Fig. 4(A)

Fig. 4(B)

Fig. 5(A)

Fig. 5(B)

Fig. 6(A)

Fig. 6(B)

Fig. 7(A)

Fig. 7(B)

Fig. 8(A)

Fig. 8(B)

Fig. 9

Fig. 10

Fig. 11(A)

Fig. 11(B)

Fig. 11(C)

Fig. 12(A)

Fig. 12(B1)

Fig. 12(C1)

Fig. 12(B2)

Fig. 12(C2)

Fig. 13

Fig. 14

Fig. 15(A)

Fig. 15(B)

Fig. 16(A)

Fig. 16(B)

Fig. 17(A)

Fig. 17(B)

Fig. 18(A)                    Fig. 18(B)

Related Art

## Fig. 19
Related Art

EXHAUST GAS

## Fig. 20

VALVE OPENING [deg]

## INTERNATIONAL SEARCH REPORT

| International application No. |
|---|
| PCT/JP2011/052105 |

**A. CLASSIFICATION OF SUBJECT MATTER**
*F02B37/18*(2006.01)i

According to International Patent Classification (IPC) or to both national classification and IPC

**B. FIELDS SEARCHED**

Minimum documentation searched (classification system followed by classification symbols)
F02B37/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | Microfilm of the specification and drawings annexed to the request of Japanese Utility Model Application No. 040265/1989(Laid-open No. 131032/1990)<br>(Mitsubishi Motors Corp.),<br>30 October 1990 (30.10.1990),<br>entire text; fig. 1 to 2<br>(Family: none) | 1<br>2 |
| Y | CD-ROM of the specification and drawings annexed to the request of Japanese Utility Model Application No. 032895/1992(Laid-open No. 090057/1993)<br>(Nichiden Kogyo Corp.),<br>07 December 1993 (07.12.1993),<br>paragraph [0013]; fig. 1<br>(Family: none) | 2 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 April, 2011 (26.04.11) | Date of mailing of the international search report<br>17 May, 2011 (17.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

EP 2 444 626 A1

## INTERNATIONAL SEARCH REPORT

International application No.

PCT/JP2011/052105

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    Since claims 2 - 16 refer to claim 1, the matter common to claims 1 - 16 is relevant to the matter set forth in claim 1.
                                                (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1 - 2

**Remark on Protest**        ☐ The additional search fees were accompanied by the applicant's protest and, where applicable, the payment of a protest fee.

                             ☐ The additional search fees were accompanied by the applicant's protest but the applicable protest fee was not paid within the time limit specified in the invitation.

                             ☐ No protest accompanied the payment of additional search fees.

Form PCT/ISA/210 (continuation of first sheet (2)) (July 2009)

32

| **INTERNATIONAL SEARCH REPORT** | International application No. |
|---|---|
| | PCT/JP2011/052105 |

Continuation of Box No.III of continuation of first sheet(2)

However, the search revealed that the above-said matter is not novel, since said matter is disclosed in the microfilm of the specification and drawings annexed to the request of Japanese Utility Model Application No. 01-040265 (Laid-open No. 02-131032), (Mitsubishi Motors Corp.), 30 October 1990 (30.10.1990), entire text, fig. 1 - 2, (Family: none). As a result, the above-said matter does not make a contribution over the prior art, and therefore, the common matter is not a special technical feature within the meaning of PCT Rule 13.2, second sentence.
In conclusion, it is obvious that the inventions in claims 1 - 16 do not comply with the requirement of unity.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2009092026 A